# EUROPEAN PATENT SPECIFICATION

(11) **EP 3 085 045 B1**
(45) Date of publication and mention of the grant of the patent: **20.02.2019**
(21) Application number: 13826654.9
(22) Date of filing: 17.12.2013
(51) Int. Cl.: H04W 4/70, H04W 12/06, H04L 29/06

(54) **SECURE TRIGGERING IN A NETWORK**
SICHERE AUSLÖSUNG IN EINEM NETZWERK
COMMANDE SÉCURISÉE DANS UN RÉSEAU

(43) Date of publication of application: 26.10.2016
(73) Proprietor: Telefonaktiebolaget LM Ericsson (publ), 164 83 Stockholm (SE)
(72) Inventor: LEHTOVIRTA, Vesa, FI-02620 Espoo (FI); ARKKO, Jari, FI-02700 Kauniainen (FI)
(74) Representative: Ericsson
(86) International application number: PCT/SE2013/051536
(87) International publication number: WO 2015/094034

(56) References cited:
- WO-A2-2013/061614
- US-A1- 2002 143 766
- 3RD GENERATION PARTNERSHIP PROJECT (3GPP): "3GPP TS 33.187: Security aspects of Machine-Type and other Mobile Data Applications Communications Enhancements (Release 12) V0.1.0", 3RD GENERATION PARTNERSHIP PROJECT; TECHNICAL SPECIFICATION GROUP SERVICES AND SYSTEM ASPECTS, 30 April 2013 (2013-04-30), XP050692480, [retrieved on 2013-04-30]
- ALCATEL-LUCENT: "Triggering MTC devices w/o SMS or long lasting NAT bindings", 3GPP, SA WG2, S2-111223, 26 February 2011 (2011-02-26), XP050524208, [retrieved on 2011-02-26]
- SAMSUNG: "Evaluation of Device Triggering Solutions", 3GPP, SA WG3, S3-120470_SAM_SMS_DT_EVA, 14 May 2012 (2012-05-14), XP050636661, [retrieved on 2012-05-14]
- HUAWEI: "Security analysis of MTC device triggering solutions", 3GPP, SA WG3, S3-120111, 30 January 2012 (2012-01-30), XP050577453, [retrieved on 2012-01-30]
- CHINA MOBILE: "Update the security requirements of MTC device triggering", 3GPP, SA WG3, S3-120390, 14 May 2012 (2012-05-14), XP050636583, [retrieved on 2012-05-14]
- CHINA MOBILE: "Solution way forward on Device Triggering Solution", 3GPP, SA WG3, S3-120400_CMCC CONSIDERATION_SMS_DT_EVA, 14 May 2012 (2012-05-14), XP050636593, [retrieved on 2012-05-14]
- 3RD GENERATION PARTNERSHIP PROJECT (3GPP): "3GPP TR 23.888: System Improvements for Machine-Type Communications (Release 10) V0.3.2", 3RD GENERATION PARTNERSHIP PROJECT; TECHNICAL SPECIFICATION GROUP SERVICES AND SYSTEM ASPECTS, 1 March 2010 (2010-03-01), XP007917755,
- 3RD GENERATION PARTNERSHIP PROJECT (3GPP): "TS 23.682: Architecture enhancements to facilitate communications with packet data networks and applications (Release 12) V12.0.0", 3RD GENERATION PARTNERSHIP PROJECT; TECHNICAL SPECIFICATION GROUP SERVICES AND SYSTEM ASPECTS, 13 December 2013 (2013-12-13), XP050728780, [retrieved on 2013-12-13]

## Description

### Technical Field

The present invention relates to wake-up, or triggering, mechanisms for entities in a telecommunications network. In particular, although not exclusively, the invention relates to apparatus and methods for authenticating wake-up, or triggering, requests to devices without human operators.

### Background

Current cellular communication networks offer a high degree of security to users. Security ensures both authentication of users to the network and *vice versa*, and protection against eavesdropping. Security may also provide integrity protection allowing a recipient of data (possibly within the network) to confirm the integrity of sent data. This may involve a sender adding an integrity checksum to a message and which is computed using a secret key. The receiver, knowing the secret key, can verify the integrity checksum and thereby ensure that the message has indeed been sent by the trusted sender and has not been tampered with while in transit.

Such security mechanisms have been developed to work efficiently with conventional cellular network use cases. These tend to be concerned with users possessing mobile devices such as mobile telephones, smart phones, and other wireless enabled devices, and who make use of voice and data services. Such services involve the transfer of significant amounts of data to and from the user devices. Volumes of signalling traffic associated with these scenarios are not great when compared to the transferred data volumes. As such, the signalling overheads associated with security mechanism such as client and network authentication are relatively small.

In the coming years it is expected that there will be a rapid growth in so-called machine-to-machine (M2M) applications, or Machine Type Communications (MTC), that use cellular network infrastructure. Such applications involve devices such as sensors and actuators communicating with other devices or network servers, often without direct human operation. An example application might involve domestic water meters configured to transmit water consumption readings periodically to a server owned by the utility company supplying water. M2M applications are expected to increase dramatically the number of wirelessly connected devices in use with cellular networks. Ericsson™ has predicted 50 billion such devices by the year 2020.

In systems supporting M2M applications, a feature that is generally needed is a mechanism to trigger (or wake up) an entity (e.g. a device). Triggering typically means that a first entity in the network (e.g. an application server) wants to trigger a second entity (e.g. a second device), which is possibly in a sleep mode prior to the triggering) to perform some action which may include contacting the first entity (or another entity). This may be for example metering a temperature and reporting it to the first entity.

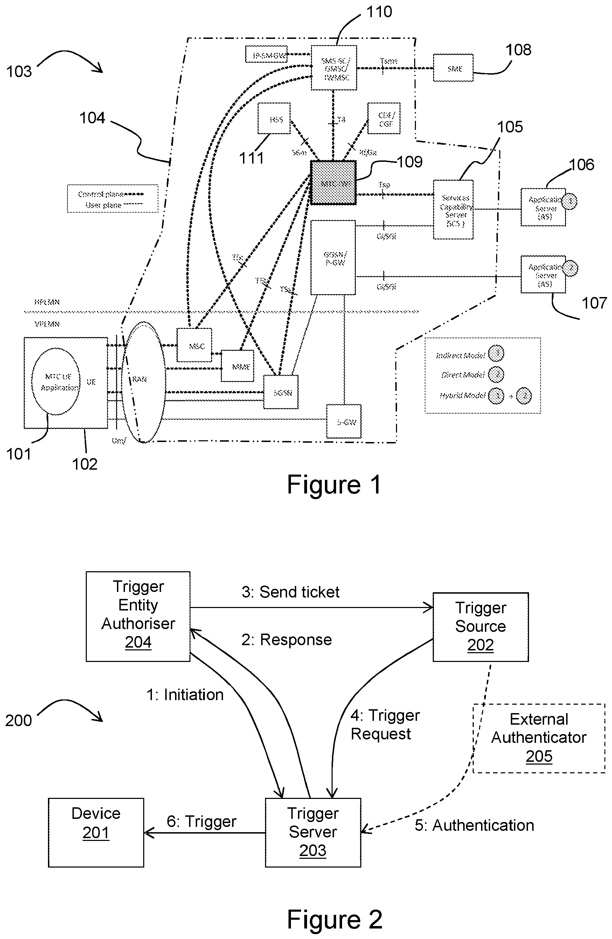

Figure 1 is a schematic illustration of an MTC UE (Machine Type Communications User Equipment) application 101 operating on a UE device 102 in a 3GPP network 103. A double dotted line 104 illustrates the boundaries of the 3GPP system. A Services Capability Server (SCS) 105 could be inside or outside the 3GPP system. Where a 3GPP system is used to support M2M applications, it is likely to be an Application Server (AS) 106, 107 or a generic SMS source (SME) 108 that is used to trigger the device 102.

M2M devices are frequently battery operated devices with limited power resources, and may not have access to power supplies to charge their batteries. Despite this they may be required to operate for very long times. This makes the M2M devices very sensitive to power consumption and vulnerable to unauthorized or fake trigger requests from the network, which could drain the battery.

One possible approach to mitigate the threat of fake trigger requests could be to use integrity protection of the trigger request between the trigger source (e.g. AS 106) and the device 102. This would be based on some keys shared between the device and the AS. While this kind of end-to-end integrity protection would help the device to distinguish real triggers from fake triggers, it would still be harmful to the device as it would have to use power to receive and verify the integrity of the trigger request. Therefore even fake trigger requests which are ultimately rejected would require action on the part of the device, leading to wasted power.

Another possibility is that some node in the intermediate network between the device and the AS could determine if the AS 106 is authorized to send trigger requests to this device 102, and consequently discards fake trigger requests. 3GPP has taken this approach in 3GPP Release 11 and is investigating other mechanisms, like end-to-end integrity protection, in ongoing Release 12. Document WO 2013/061614 A2 discloses a prior art system and method for authorization of trigger request messages which is based on access control lists.

In a 3GPP system such as that shown in Figure 1, trigger requests can be sent from an AS 106 via SCS 105 to a MTC-IWF (MTC Interworking function) 109 over a Tsp interface or from an SME 108 to a SMSC (Short Message Service Centre) 110 over a Tsms interface. In both of these cases, the authorization of the source of the trigger request is checked but in different ways.

In the case of a trigger request over Tsp the MTC-IWF 109 and SCS 105 are required to have credentials to mutually authenticate each other. After authentication the MTC-IWF 109 checks from a database (in HSS 111) if the SCS 105 is authorized to trigger this device 102. The trigger request is typically originated from the AS 106, but it has been left out of the 3GPP scope of how the SCS 105 will authorize the AS 106.

In the case of a trigger request over Tsms the SMSC 110 can only accept trigger requests from "trusted sources", i.e. "trusted" SMEs 108. This means that there is no authentication mechanism specified but the authorization decision is based on trust. In practice this limits the number of authorized senders of device triggers to known entities who have a relation with the operator anyway and are likely to be big players. One reason for relying on "trusted sources" is that Tsms is a legacy interface based on proprietary mechanisms, and it is considered desirable that this is kept intact. Another reason was that the "SME" 108 is a generic source of SMS and it would not be feasible to establish authentication credentials between the SMSC 110 and all possible SMEs.

The approaches taken by 3GPP highlight the more general fact that the number of sources allowed to issue trigger requests is currently very limited, whatever system or network is used. A common reason for this is that it is very difficult for the intermediate system providing the "trigger service" (like the 3GPP system in the example above) to verify authorization of an *arbitrary* trigger request source (*e.g.* ASs owned by individuals) in practice. This is because trustworthy authorization needs to be preceded by authentication, and even though the (owner of the) device could specify a list of authorized trigger request sources (like ASs) and give that list to the intermediate system, the intermediate system would need to share or exchange authentication credentials with all listed trigger request sources, which is likely not feasible in practice. Therefore, there is currently no way for an arbitrary trigger source to be authorized to send a trigger to a device.

### Summary

It is an object of the present invention to address, or at least alleviate, the problems described above.

In accordance with one aspect of the present invention there is provided a system for authorising a trigger source to issue a trigger request to a device in a network, the device being associated with a trigger entity authoriser and configured to receive trigger messages only *via* a trigger server. The trigger entity authoriser is configured to send an initiation message to the trigger server *via* a secure connection, the initiation message including an indication of the identity of the trigger source and the identity of the device. The trigger entity authoriser and trigger server are configured to agree a ticket usable by the trigger server as a unique association of the trigger source and the device. The trigger entity authoriser is configured to send the ticket to the trigger source. The trigger source is configured to send a trigger request message to the trigger server, the trigger request message including the ticket and a request to trigger the device. The trigger server is configured to receive the ticket from the trigger source and authenticate the trigger source and, if the received ticket correctly associates the authenticated trigger source and the device, to send a trigger message (6) to the device.

The trigger server may be configured to generate the ticket in response to receipt of the initiation message, and send the ticket to the trigger entity authoriser.

The trigger entity authoriser may be configured to include in the initiation message an indication of a mechanism by which the trigger source should be authenticated by the trigger server. The trigger entity authoriser may be configured to send the indication of the mechanism to the trigger source with the ticket.

The trigger server may be configured to authenticate the trigger source using the indicated mechanism.

The trigger entity authoriser may be configured to send an address of the trigger server to the trigger source with the ticket.

The trigger server may be configured to authenticate the trigger source using a delegated authenticator.

The trigger entity authoriser and trigger server may be configured to agree credentials for the trigger source to enable the trigger server to authenticate the trigger source. The trigger entity authoriser may be configured to send the credentials to the trigger source over a secure connection. The trigger source may be configured to authenticate with the credentials to the trigger server when sending a trigger request.

Alternatively, the credentials may also be sent together with the trigger request.

The trigger entity authoriser may be a module configured to run at the device. The device may be an M2M device.

The trigger source may be an application server.

In accordance with another aspect of the present invention there is provided a trigger entity authoriser for authorising a trigger source to issue a trigger request to a device in a network. The trigger entity authoriser comprises a message initiator for sending an initiation message to a trigger server *via* a secure connection, the initiation message including an indication of the identity of the trigger source and the identity of the device.

The trigger entity authoriser further comprises a ticket negotiator for sending to or receiving from the trigger server a ticket associating the trigger source and the device, and a ticket sender for sending the ticket to the trigger source.

The message initiator may be configured to include in the initiation message an indication of a mechanism by which the trigger source should be authenticated by the trigger server, and the ticket sender may be configured to send the indication of the mechanism to the trigger source.

The ticket sender may be configured to send an address of the trigger server to the trigger source.

The ticket negotiator may be configured to send to or receive from the trigger server credentials for the trigger source to enable the trigger server to authenticate the trigger source, and to send the credentials to the trigger source over a secure connection.

In one embodiment the trigger entity authoriser may be provided in an M2M device.

In accordance with another aspect of the present invention there is provided a trigger source for issuing a trigger request to a device in a network. The trigger source comprises a ticket receiver for receiving a ticket from a trigger entity authoriser, the ticket usable by a trigger server as a unique association of the trigger source and the device. The trigger source further comprises a trigger request sender for sending a trigger request to the trigger server accompanied by the ticket, and an authenticator for authenticating the trigger source to the trigger server.

The ticket receiver may be configured to receive from the trigger entity authoriser an indication of an authentication mechanism, and the authenticator may be configured to authenticate the trigger source to the trigger server using the indicated authentication mechanism. The authentication mechanism may include the use of a delegated external authenticator in combination with the authenticator of the trigger source.

The ticket receiver may be configured to receive from the trigger entity authoriser credentials for authenticating the trigger source to the trigger server and to use the credentials in the authentication.

In accordance with another aspect of the present invention there is provided a trigger server for sending a trigger message to a device in a network. The trigger server comprises an initiation message receiver for receiving an initiation message from a trigger entity authoriser via a secure connection, the initiation message including an indication of the identity of the device and the identity of a trigger source to be authorised to issue a trigger request to the device. The trigger server further comprises a ticket negotiator for agreeing with the trigger entity authoriser a ticket usable by the trigger server as a unique association of the trigger source and the device, and a trigger request receiver for receiving a trigger request message from the trigger source, the trigger request message including a request to trigger the device and the ticket. The trigger server further comprises an authenticator for authenticating the trigger source and a trigger sender for sending a trigger message to the device if the received ticket correctly associates the authenticated trigger source and the device.

The ticket negotiator may be configured to generate the ticket in response to receipt of the initiation message, and send the ticket to the trigger entity authoriser.

The initiation message receiver may be configured to receive an indication of a mechanism for authenticating the trigger source, and to authenticate the trigger source using the indicated mechanism.

In accordance with another aspect of the present invention there is provided a method of operating a trigger entity authoriser to authorise a trigger source to issue a trigger request to a device in a network. The method comprises sending an initiation message to a trigger server *via* a secure connection, the initiation message including an indication of the identity of the trigger source and the identity of the device. The method further comprises sending to or receiving from the trigger server a ticket associating the trigger source and the device, and sending the ticket to the trigger source.

An indication of a mechanism by which the trigger source should be authenticated by the trigger server may be included in the initiation message and sent to the trigger source with the ticket.

Credentials for the trigger source may be sent to or received from the trigger server to enable the trigger server to authenticate the trigger source, and sent to the trigger source over a secure connection.

In accordance with another aspect of the present invention there is provided a method of operating a trigger source to issue a trigger request to a device in a network. The method comprises receiving a ticket from a trigger entity authoriser, the ticket usable by a trigger server as a unique association of the trigger source and the device. The method further comprises sending the trigger request to the trigger server accompanied by the ticket, and authenticating the trigger source to the trigger server.

The method may further comprise receiving from the trigger entity authoriser an indication of an authentication mechanism, and authenticating the trigger source to the trigger server using the indicated authentication mechanism.

Credentials for authenticating the trigger source to the trigger server may be received from the trigger entity authoriser and used in the authentication.

In accordance with another aspect of the present invention there is provided a method of operating a trigger server to send a trigger message to a device in a network. The method comprises receiving an initiation message from a trigger entity authoriser via a secure connection, the initiation message including an indication of the identity of the device and the identity of a trigger source to be authorised to issue a trigger request to the device. The method further comprises agreeing with the trigger entity authoriser a ticket usable by the trigger server as a unique association of the trigger source and the device, storing the ticket, and receiving a trigger request message from the trigger source, the trigger request message including a request to trigger the device and the ticket. The method further comprises authenticating the trigger source and, if the received ticket correctly associates the authenticated trigger source and the device, sending a trigger message to the device.

The ticket may be generated in response to receipt of the initiation message, and sent to the trigger entity authoriser.

An indication of a mechanism for authenticating the trigger source may be received in the initiation message, and the trigger source may be authenticated using the indicated mechanism.

The invention also provides a computer program, comprising computer readable code which, when operated by a trigger entity authoriser, trigger source or trigger server, causes the respective trigger entity authoriser, trigger source or trigger server to operate as a trigger entity authoriser, trigger source or trigger server as described above.

The invention further provides a computer program, comprising computer readable code which, when operated by a device, causes the device to operate any of the methods described above.

The invention also provides a memory, optionally arranged in the form of a computer program product, comprising a computer program and a computer readable means on which the computer program is stored.

### Brief Description of the Drawings

Some preferred embodiments of the invention will now be described by way of example only and with reference to the accompanying drawings, in which:
Figure 1 is a schematic diagram of elements of an exemplary 3GPP network containing an MTC UE;
Figure 2 is a schematic diagram including elements of a network;
Figures 3A and 3B are schematic diagrams of implementations of a trigger entity authoriser;
Figures 4A and 4B are schematic diagrams of implementations of a trigger source;
Figures 5A and 5B are schematic diagrams of implementations of a trigger server; and
Figure 6 is a set of flowcharts illustrating the steps carried out by the trigger entity authoriser, trigger source and trigger server in authenticating the trigger source and issuing trigger instructions to a device.

### Detailed Description

Figure 2 is a schematic diagram of elements of a network 200 including a device 201 which may be an M2M device (*e.g*. a MTC UE similar to that shown in Figure 1, or other M2M capable device) which is designed to be triggered or woken up in response to a trigger request from a trigger source 202, which could for example be an Application Server or SME but is not limited to such entities. It could be another UE.

The network includes a trigger server 203, and the device 201 is configured to be woken up only when it receives a trigger message from the trigger server 203. If the network is a 3GPP network the trigger server could be a MTC-IWF, similar to that shown in Figure 1. A trigger entity authoriser 204 also has access to the network. It is assumed that the trigger entity authoriser 204 can communicate securely with the trigger server 203, for example using 3GPP security mechanisms. The trigger entity authoriser 203 may be operated, for example, by, or on behalf of, the owner of the M2M device 201.

If the trigger entity authoriser 204 wishes to authorise the trigger source 202 to trigger or wake up the device 201, then the following procedure may be carried out:
1. The trigger entity authoriser 204 sends an initiation (ticket request) message to the trigger server 203. The initiation message includes an indication of the device 201, together with the identity of the trigger source 202 which is to be authorised to trigger the device 201, and optionally a mechanism by which the trigger source 202 should be authenticated by the trigger server 203. The indicated mechanism could, for example, be a public key certificate or a Single Sign-On identity, like OpenID identity. The trigger entity authoriser 204 and the trigger server 203 may alternatively negotiate an authentication mechanism which they both support, e.g. the trigger entity authoriser 204 may send both a public key certificate and a Single Sign-On identity to the trigger server 203. The trigger server 203 may then choose the one of the public key certificate and a Single Sign-On identity it supports, or just choose one of these if it supports both. The ticket request message may also have other information related to the triggering, such as e.g. information indicative of how often, and/or in what time period, the trigger source 202 is allowed to trigger the device 201.
2. The trigger server 203 stores the information received, and allocates a ticket for the device. The ticket may be a random number. The trigger server 203 sends the ticket to the trigger entity authoriser 204. The address of the trigger server 202 may also need to be sent to the trigger entity authoriser 204 so that the trigger source 202 knows who to contact in step 4 below. It will be appreciated that it would also be possible for the trigger entity authoriser 204 to allocate the random number to the ticket and send it to the trigger server in the initiation message in step 1 above, in which case the response need only confirm receipt of the initiation message and ticket. What is important is that the ticket is bound to the trigger source - device pair.
3. The trigger entity authoriser 204 sends the ticket and the address of the trigger server to the trigger source 202. The ticket may be integrity protected to protect the contents from tampering, but in one embodiment it does not need to be encrypted when sent since it can only be used by the specific authorized trigger source 202 associated with the Ticket.
4. When the trigger source 202 needs to trigger the device 201, it sends a trigger request to the trigger server 203. The ticket is included in the trigger request or sent following authentication.
5. The trigger server 203 authenticates the trigger source 202 to confirm its identity, optionally using the method indicated in the original ticket request. This may be done by an authentication functionality in the network such as a PKI or SSO system. The ticket enables the trigger server 203 to associate the trigger request to the correct trigger source - device pair. The trigger server 203 is authorised to act on the trigger request only if the authenticated trigger source 202 is correctly associated with the ticket.

For example, in one embodiment the trigger source 202 may send a trigger request message signed with the private key corresponding to a public key sent by the trigger entity authoriser 204 to the trigger server 203 in step 1. The trigger server may need to fetch an appropriate certificate from a PKI system 205 to verify the signature.
In an alternative embodiment, the trigger source 202 may send a trigger request message with an OpenID identity, in which case the trigger server 203 authenticates the trigger source with an associated OpenID provider.

It will be noted that the trigger source 202 and trigger server 203 do not need to share credentials or even have prior knowledge of each other for authentication, but can rely on a delegated external authenticator 205 such as PKI or SSO.
6. If authentication and authorization of the trigger request from the trigger source is successful, the trigger server sends a trigger message to the device 201. As a result, the device can be triggered only by an authorized trigger source. It will be appreciated that the trigger message may be a forwarded version of the trigger request (with authentication information to identify the trigger server) or may be an entirely separate message.

The trigger entity authoriser may be operated by, or on behalf of, the owner of the device, and may communicate with the trigger server, for example, *via* a secure web portal. It may also be the case that the trigger entity authoriser is contiguous with the device 201 itself. Thus it may be the case that the device 201 is programmed by a user to receive triggers from the trigger source 202. If this is the case (and assuming the device has a secure connection to the trigger server 203), steps 1 and 2 may take place between the device 201 and trigger server 203, so that the device 201 makes the initial ticket request from the trigger server and the trigger server 203 returns the ticket to the device (or the device generates a ticket itself and sends it to the trigger server). The device 201 can then send the ticket to the trigger source 202 to enable it to authenticate itself to the trigger server. This could be done, for example, when the device 201 has as connection to the trigger source 203 as a part of normal application communication. In this scenario, once the ticket has been sent to the trigger source 202 the device can go to sleep.

Using the process described above it will be noted that there is no requirement for the trigger entity authoriser 204 to have a secure connection to the trigger source 202. However, if such a secure connection does exist then in step 1 the trigger entity authoriser 204 may send to the trigger server 203 credentials with which the identity of the trigger source 202 can be authenticated. Such credentials could include a shared key or password. Alternatively the trigger server 203 could generate these credentials and send them to the trigger entity authoriser 204.

Then in step 3 these credentials can be sent from the trigger entity authoriser 204 to the trigger source 202. This message should be encrypted to prevent eavesdropping.

In steps 4 and 5, the credentials as well as the ticket are sent from the trigger source 202 to the trigger server 203. The ticket enables the trigger server 203 to associate the trigger request to the correct trigger source - device pair and the credentials enable the authentication of the trigger source 202, optionally in conjunction with the mechanism specified in step 1 as before.

For example, the trigger source 202 could set up a TLS connection to the Trigger Server and use the credential as a password for HTTP digest within the TLS connection.

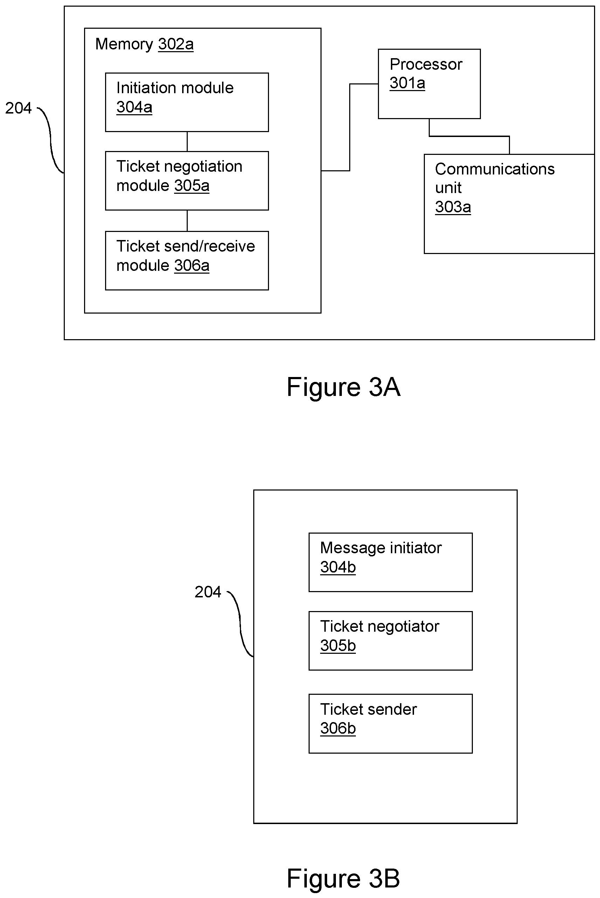

Figure 3A is a schematic diagram illustrating some of the structure of one implementation of the trigger entity authoriser 204. The trigger entity authoriser 204 includes a processor 301a, memory 302a and communications unit 303a for communicating with other entities in the network. As previously discussed, the trigger entity authoriser may be independent of the device itself, or may be implemented in the device. The memory 302a includes instructions executable by the processor 301a to operate the communications unit 303a, and further includes an initiation module 304a having instructions causing the processor to send an initiation message (using the communications unit) towards the trigger server 203. The initiation message includes an indication of the identity of the trigger source 202 and the identity of the device 201. The memory also includes a ticket negotiation module 305a configured either to send a ticket associating the trigger source and the device to the trigger server 203, or to receive such a ticket from the trigger server. The memory also includes a ticket sending module 306a configured to send the ticket to the trigger source 202.

Figure 3B is a schematic diagram illustrating an alternative implementation of the trigger entity authoriser 204 having a message initiator 304b for sending an initiation message towards the trigger server 203, a ticket negotiator 305b for sending a ticket to the trigger server or receiving such a ticket from the trigger server, and a ticket sender 306b for sending the ticket to the trigger source 202. In one embodiment this may be part of a memory, such that the message initiator, ticket negotiator and ticket sender are interacting units provided as software in the memory. In another embodiment it could illustrate part of a processor, the interacting units provided as hardware in the form of suitable circuitry. It will be appreciated that a combination of these two embodiments is also possible. In general it will be appreciated that the trigger entity authoriser may include hardware implementation such as e.g. one or more ASICs, software implementation, or a combination thereof.

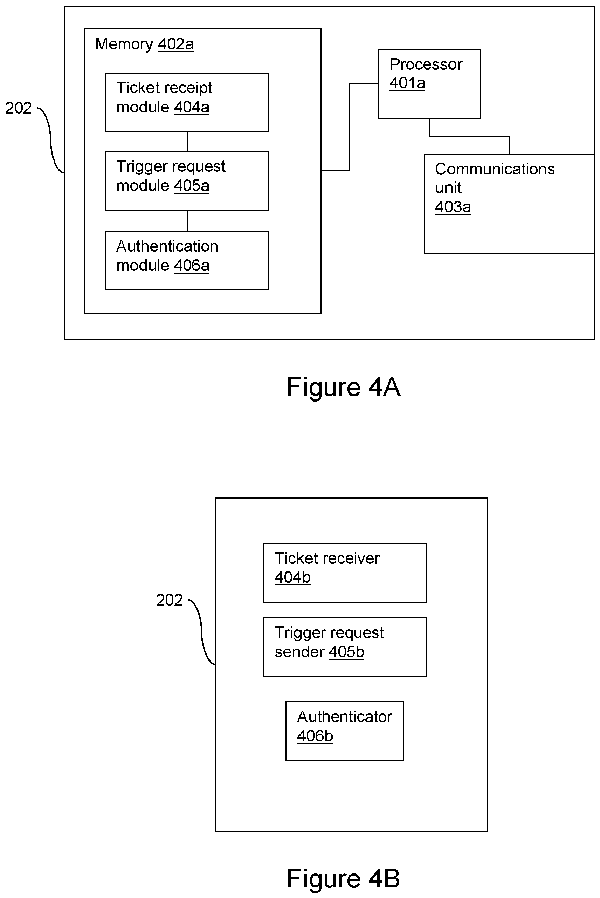

Figure 4A is a schematic diagram illustrating some of the structure of one implementation of the trigger source 202. The trigger source 202 includes a processor 401a, memory 402a and communications unit 403a for communicating with other entities in the network. The memory 402a includes instructions executable by the processor 401a to operate the communications unit 403a, and further includes a ticket receipt module 404a having instructions causing the processor to receive (*via* the communications module) a ticket from the trigger entity authoriser 204. The memory also includes a trigger request module 405a configured to send a trigger request to the trigger server accompanied by the ticket, and an authentication module 406a configured to authenticate the trigger source 202 to the trigger server 203.

Figure 4B is a schematic diagram illustrating an alternative implementation of the trigger source 202 having a ticket receiver 404b for receiving the ticket from the trigger entity authoriser 204, a trigger request sender 405b for sending a trigger request to the trigger server 203 accompanied by the ticket, and an authenticator 406b for authenticating the trigger source to the trigger server. In one embodiment this may be part of a memory, such that the ticket receiver, ticket request sender and authenticator are interacting units provided as software in the memory. In another embodiment it could illustrate part of a processor, the interacting units provided as hardware in the form of suitable circuitry. It will be appreciated that a combination of these two embodiments is also possible. In general it will be appreciated that the trigger source may include hardware implementation such as e.g. one or more ASICs, software implementation, or a combination thereof.

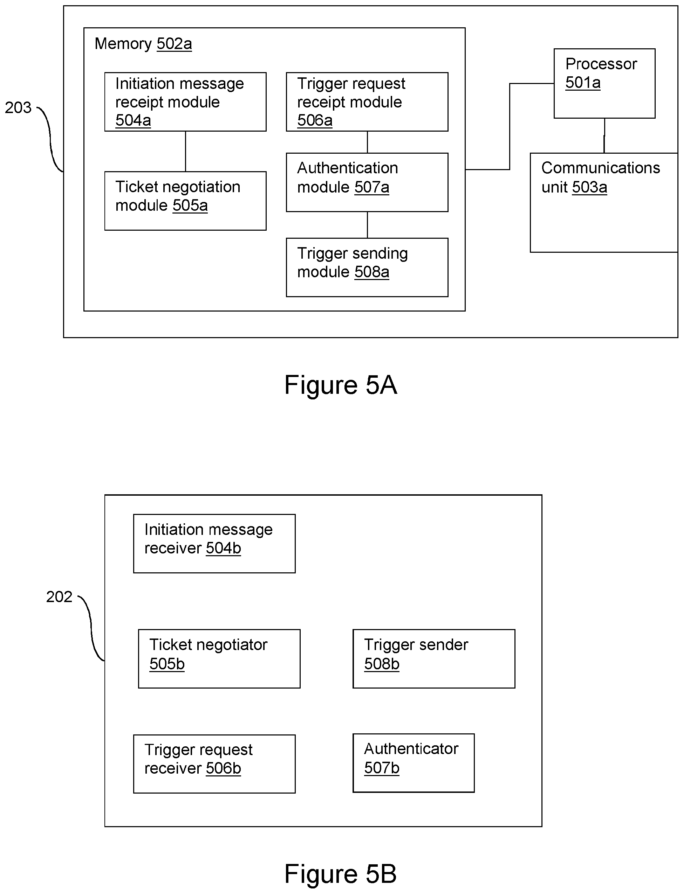

Figure 5A is a schematic diagram illustrating some of the structure of one implementation of the trigger server 203. The trigger server 203 includes a processor 501a, memory 502a and communications unit 503a for communicating with other entities in the network. The memory 502a includes instructions executable by the processor 501a to operate the communications unit 503a, and further includes an initiation message receipt module 504a having instructions causing the processor to receive an initiation message from the trigger entity authoriser 204. The memory also includes a ticket negotiation module 505a configured either to receive a ticket from the trigger entity authoriser or to generate and send the ticket to the trigger entity authoriser. The ticket associates the identity of the device 201 with that of the trigger source 202.

The memory also includes a trigger request receipt module 506a having instructions causing the processor to receive a trigger request from the trigger source 202. An authentication module 507a is configured to authenticate the trigger source and confirm that the identity of the trigger source matches that associated with the ticket. A trigger sending module 508a is configured to cause the processor to send a trigger message to the device 201 if the authentication is successful.

Figure 5B is a schematic diagram illustrating an alternative implementation of the trigger server 203 having an initiation request receiver 504b, ticket negotiator 505b, trigger request receiver 506b, authenticator 507b and trigger sender 508b. The initiation request receiver 504b receives the initiation message from the trigger entity authoriser 204. The ticket negotiator 505b either receives a ticket from the trigger entity authoriser or generates and sends the ticket to the trigger entity authoriser. The trigger request receiver 506b causes the processor to receive a trigger request from the trigger source 202. The authenticator 507b authenticates the trigger source and confirms that the identity of the trigger source matches that associated with the ticket. The trigger sending module 508b causes the processor to send a trigger message to the device 201 if the authentication is successful. In one embodiment this implementation may be part of a memory, such that the initiation request receiver, ticket negotiator, trigger request receiver, authenticator and trigger sender are interacting units provided as software in the memory. In another embodiment it could illustrate part of a processor, the interacting units provided as hardware in the form of suitable circuitry. It will be appreciated that a combination of these two embodiments is also possible. In general it will be appreciated that the trigger server may include hardware implementation such as e.g. one or more ASICs, software implementation, or a combination thereof.

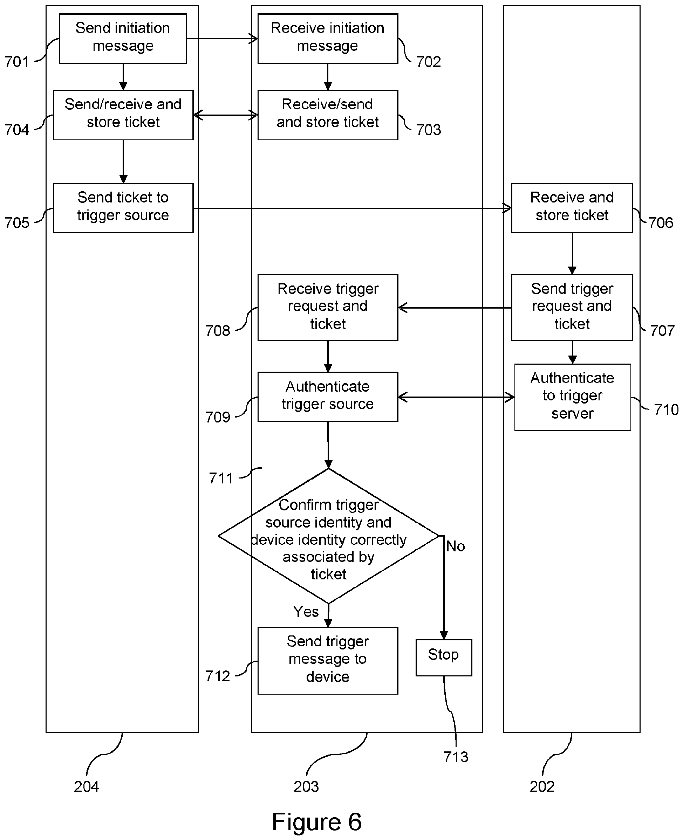

Figure 6 includes three flowcharts illustrating the steps which may be carried out by the trigger entity authoriser 204, trigger server 203 and trigger source 202 in order to authorise the trigger source 202 to send a trigger message to the device 201. The trigger entity authoriser 204 sends an initiation message 701 to the trigger server 203. The trigger server 203 receives the initiation message 702, generates a ticket, and sends it 703, 704 to the trigger entity authoriser 204. Alternatively, the ticket may be generated by the trigger entity authoriser and sent to the trigger server, either as part of the initiation message or subsequently.

The trigger entity authoriser 204 sends the ticket 705 to the trigger source 202, together with the address of the trigger server (and optionally an indication of a desired authentication mechanism). The trigger source 202 receives and stores the ticket 706 for future use.

When it is required that the device should be triggered, the trigger source 202 sends a trigger request 707, including the ticket, to the trigger server 203. When the trigger server 203 receives the trigger request 708 it authenticates 709, 710 the identity of the trigger source 202, and confirms that the identity of the trigger source, and the identity of the device for which the trigger is requested, match the trigger source and device associated with the ticket 711. If the authentication is successful and the ticket matches, the trigger server 203 sends a trigger message 712 to the device 201. If the authentication is not successful or the ticket does not match, the process stops 713 without a trigger message being sent to the device.

It will be appreciated that the approach described above allows a device to dynamically and securely authorize arbitrary trigger sources such as application servers or even other devices to send a trigger. The trigger server and trigger source do not need to share credentials or even be aware of each other before the trigger request arrives at the trigger server. This significantly increases the possibilities available for choosing trigger sources which can trigger M2M devices. This, in turn, enables easier introduction of M2M services.

## Claims

1. A system for authorising a trigger source (202) to issue a trigger request to a device (201) in a network (200), the device being associated with a trigger entity authoriser (204) and configured to receive trigger messages only *via* a trigger server (203), the system comprising:
the trigger entity authoriser being configured to send an initiation message (1) to the trigger server *via* a secure connection, the initiation message including an indication of the identity of the trigger source and the identity of the device;
the trigger entity authoriser and trigger server being configured to agree a ticket usable by the trigger server as a unique association of the trigger source and the device;
the trigger entity authoriser being configured to send the ticket (3) to the trigger source;
the trigger source being configured to send a trigger request message (4) to the trigger server, the trigger request message including the ticket and a request to trigger the device; and
the trigger server being configured to receive the ticket from the trigger source and authenticate the trigger source (5) and, if the received ticket correctly associates the authenticated trigger source and the device, to send a trigger message (6) to the device.

2. A trigger entity authoriser (204) for authorising a trigger source (202) to issue a trigger request to a device (201) in a network (200), comprising:
a message initiator (304b) for sending an initiation message to a trigger server (203) *via* a secure connection, the initiation message including an indication of the identity of the trigger source and the identity of the device;
a ticket negotiator (305b) for sending to or receiving from the trigger server a ticket associating the trigger source and the device (305b); and
a ticket sender for sending the ticket (306b) to the trigger source.

3. The trigger entity authoriser of claim 2, wherein the message initiator (304b) is configured to include in the initiation message an indication of a mechanism by which the trigger source should be authenticated by the trigger server, and the ticket sender (306b) is configured to send the indication of the mechanism to the trigger source.

4. The trigger entity authoriser of claim 2 or 3, wherein the ticket sender is configured to send an address of the trigger server to the trigger source.

5. The trigger entity authoriser of any of claims 2 to 4, wherein the ticket negotiator is configured to send to or receive from the trigger server credentials for the trigger source to enable the trigger server to authenticate the trigger source, and to send the credentials to the trigger source over a secure connection.

6. An M2M device comprising the trigger entity authoriser of any of claims 2 to 5.

7. A trigger source (202) for issuing a trigger request to a device (201) in a network (200), comprising:
a ticket receiver (404b) for receiving a ticket from a trigger entity authoriser (204), the ticket usable by a trigger server (203) as a unique association of the trigger source and the device;
a trigger request sender (405b) for sending a trigger request to the trigger server accompanied by the ticket; and
an authenticator (406b) for authenticating the trigger source to the trigger server.

8. The trigger source of claim 7, wherein the ticket receiver (404b) is configured to receive from the trigger entity authoriser an indication of an authentication mechanism, and the authenticator (406b) is configured to authenticate the trigger source to the trigger server using the indicated authentication mechanism.

9. The trigger source of claim 8, wherein the authentication mechanism includes the use of a delegated external authenticator (205).

10. The trigger source of any of claims 7 to 8, wherein the ticket receiver (404b) is configured to receive from the trigger entity authoriser credentials for authenticating the trigger source to the trigger server and to use the credentials in the authentication.

11. A trigger server (203) for sending a trigger message to a device (201) in a network, comprising:
an initiation message receiver (504b) for receiving an initiation message from a trigger entity authoriser (204) via a secure connection, the initiation message including an indication of the identity of the device and the identity of a trigger source (202) to be authorised to issue a trigger request to the device;
a ticket negotiator (505b) for agreeing with the trigger entity authoriser a ticket usable by the trigger server as a unique association of the trigger source and the device, and storing the ticket;
a trigger request receiver (506b) for receiving a trigger request message from the trigger source, the trigger request message including a request to trigger the device and the ticket;
an authenticator (507b) for authenticating the trigger source; and
a trigger sender (508b) for sending a trigger message to the device if the received ticket correctly associates the authenticated trigger source and the device.

12. The trigger server of claim 11, wherein the ticket negotiator (505b) is configured to generate the ticket in response to receipt of the initiation message, and send the ticket to the trigger entity authoriser.

13. The trigger server of claim 11 or 12, wherein the initiation message receiver is configured to receive an indication of a mechanism for authenticating the trigger source, and to authenticate the trigger source using the indicated mechanism.

14. A method of operating a trigger entity authoriser (204) to authorise a trigger source (202) to issue a trigger request to a device (201) in a network (200), the method comprising:
sending an initiation message (701) to a trigger server (203) *via* a secure connection, the initiation message including an indication of the identity of the trigger source and the identity of the device;
sending to or receiving from the trigger server (704) a ticket associating the trigger source and the device; and
sending the ticket (705) to the trigger source.

15. A method of operating a trigger source (202) to issue a trigger request to a device (201) in a network (200), the method comprising:
receiving a ticket (706) from a trigger entity authoriser (204), the ticket usable by a trigger server (203) as a unique association of the trigger source and the device;
sending the trigger request (707) to the trigger server accompanied by the ticket; and
authenticating (210) the trigger source to the trigger server.

16. A method of operating a trigger server (203) to send a trigger message to a device (201) in a network (200), the method comprising:
receiving an initiation message (702) from a trigger entity authoriser (204) via a secure connection, the initiation message including an indication of the identity of the device and the identity of a trigger source (202) to be authorised to issue a trigger request to the device;
agreeing (703) with the trigger entity authoriser a ticket usable by the trigger server as a unique association of the trigger source and the device, and store the ticket;
receiving a trigger request message (708) from the trigger source, the trigger request message including a request to trigger the device and the ticket;
authenticating the trigger source (709); and
if the received ticket correctly associates the authenticated trigger source and the device (711), sending a trigger message (712) to the device.

17. A computer program, comprising computer readable code which, when operated by a trigger entity authoriser, causes the trigger entity authoriser to operate as a trigger entity authoriser according to any of claims 2 to 5.

18. A computer program, comprising computer readable code which, when operated by a trigger source, causes the trigger source to operate as a trigger source according to any of claims 7 to 10.

19. A computer program, comprising computer readable code which, when operated by a trigger server, causes the trigger server to operate as a trigger server according to any of claims 11 to 13.

20. A computer program comprising computer readable code which, when run on a device, causes the device to execute the method according to any of claims 14 to 16.

21. A memory comprising a computer readable means on which a computer program according to claim 19 or 20 is stored.

## Patentansprüche

1. System zum Autorisieren einer Auslösequelle (202) zum Ausgeben einer Auslöseanforderung an eine Vorrichtung (201) in einem Netzwerk, wobei die Vorrichtung mit einer Auslöseinstanzen-Autorisierungseinrichtung (204) assoziiert und so konfiguriert ist, dass sie Auslösenachrichten nur über einen Auslöseserver (203) empfängt, wobei das System umfasst, dass:
die Auslöseinstanzen-Autorisierungseinrichtung so konfiguriert ist, dass sie eine Initiierungsnachricht (1) über eine sichere Verbindung an den Auslöseserver sendet, wobei die Initiierungsnachricht eine Angabe der Identität der Auslösequelle und der Identität der Vorrichtung umfasst;
die Auslöseinstanzen-Autorisierungseinrichtung und der Auslöseserver so konfiguriert sind, dass sie ein Ticket vereinbaren, das vom Auslöseserver als eine eindeutige Assoziierung der Auslösequelle und der Vorrichtung verwendet werden kann;
die Auslöseinstanzen-Autorisierungseinrichtung zum Senden des Tickets (3) an die Auslösequelle konfiguriert ist;
die Auslösequelle so konfiguriert ist, dass sie eine Auslöseanforderungsnachricht (4) an den Auslöseserver sendet, wobei die Auslöseanforderungsnachricht das Ticket und eine Anforderung zum Auslösen der Vorrichtung umfasst; und
der Auslöseserver so konfiguriert ist, dass er das Ticket von der Auslösequelle empfängt und die Auslösequelle (5) authentisiert und, wenn das empfangene Ticket die authentisierte Auslösequelle und die Vorrichtung korrekt assoziiert, eine Auslösenachricht (6) an die Vorrichtung sendet.

2. Auslöseinstanzen-Autorisierungseinrichtung (204) zum Autorisieren einer Auslösequelle (202) zum Ausgeben einer Auslöseanforderung an eine Vorrichtung (201) in einem Netzwerk (200), umfassend:
eine Nachrichten-Initiierungseinrichtung (304b) zum Senden einer Initiierungsnachricht über eine sichere Verbindung an einen Auslöseserver (203), wobei die Initiierungsnachricht eine Angabe der Identität der Auslösequelle und der Identität der Vorrichtung umfasst;
eine Ticket-Verhandlungseinrichtung (305b) zum Senden an den oder Empfangen von dem Auslöseserver eines Tickets, das die Auslösequelle und die Vorrichtung (305b) assoziiert; und
einen Ticket-Sender zum Senden des Tickets (306b) an die Auslösequelle.

3. Auslöseinstanzen-Autorisierungseinrichtung nach Anspruch 2, wobei die Nachrichten-Initiierungseinrichtung (304b) so konfiguriert ist, dass sie eine Angabe eines Mechanismus in die Initiierungsnachricht einfügt, durch welchen die Auslösequelle durch den Auslöseserver authentisiert werden sollte, und der Ticket-Sender (306b) zum Senden der Angabe des Mechanismus an die Auslösequelle konfiguriert ist.

4. Auslöseinstanzen-Autorisierungseinrichtung nach Anspruch 2 oder 3, wobei der Ticket-Sender zum Senden einer Adresse des Auslöseservers an die Auslösequelle konfiguriert ist.

5. Auslöseinstanzen-Autorisierungseinrichtung nach einem der Ansprüche 2 bis 4, wobei die Ticket-Verhandlungseinrichtung so konfiguriert ist, dass sie Anmeldeinformationen für die Auslösequelle an den Auslöseserver sendet oder von diesem empfängt, um den Auslöseserver zum Authentisieren der Auslösequelle und Senden der Anmeldeinformationen über eine sichere Verbindung an die Auslösequelle zu befähigen.

6. M2M-Vorrichtung, umfassend die Auslöseinstanzen-Autorisierungseinrichtung nach einem der Ansprüche 2 bis 5.

7. Auslösequelle (202) zum Ausgeben einer Auslöseanforderung an eine Vorrichtung (201) in einem Netzwerk (200), umfassend:
einen Ticket-Empfänger (404b) zum Empfangen eines Tickets von einer Auslöseinstanzen-Autorisierungseinrichtung (204), wobei das Ticket von einem Auslöseserver (203) als eine eindeutige Assoziierung der Auslösequelle und der Vorrichtung verwendet werden kann;
einen Auslöseanforderungssender (405b) zum Senden einer Auslöseanforderung zusammen mit dem Ticket an den Auslöseserver; und
eine Authentisierungseinrichtung (406b) zum Authentisieren der Auslösequelle für den Auslöseserver.

8. Auslösequelle nach Anspruch 7, wobei der Ticket-Empfänger (404b) zum Empfangen einer Angabe eines Authentisierungsmechanismus von der Auslöseinstanzen-Autorisierungseinrichtung konfiguriert ist, und die Authentisierungseinrichtung (406b) zum Authentisieren der Auslösequelle für den Auslöseserver unter Verwendung des angegebenen Authentisierungsmechanismus konfiguriert ist.

9. Auslösequelle nach Anspruch 8, wobei der Authentisierungsmechanismus die Verwendung einer delegierten externen Authentisierungseinrichtung (205) umfasst.

10. Auslösequelle nach einem der Ansprüche 7 bis 8, wobei der Ticket-Empfänger (404b) so konfiguriert ist, dass er Anmeldeinformationen von der Auslöseinstanzen-Autorisierungseinrichtung zum Authentisieren der Auslösequelle für den Auslöseserver empfängt und die Anmeldeinformationen bei der Authentisierung verwendet.

11. Auslöseserver (203) zum Senden einer Auslösenachricht an eine Vorrichtung (201) in einem Netzwerk, umfassend:
einen Initiierungsnachrichtenempfänger (504b) zum Empfangen einer Initiierungsnachricht von einer Auslöseinstanzen-Autorisierungseinrichtung (204) über eine sichere Verbindung, wobei die Initiierungsnachricht eine Angabe der Identität der Vorrichtung und der Identität einer Auslösequelle (202) umfasst, die zum Ausgeben einer Auslöseanforderung an die Vorrichtung autorisiert werden soll;
eine Ticket-Verhandlungseinrichtung (505b) zum Vereinbaren eines Tickets mit der Auslöseinstanzen-Autorisierungseinrichtung, das vom Auslöseserver als eine eindeutige Assoziierung der Auslösequelle und der Vorrichtung verwendet werden kann, und Speichern des Tickets;
einen Auslöseanforderungsempfänger (506b) zum Empfangen einer Auslöseanforderungsnachricht von der Auslösequelle, wobei die Auslöseanforderungsnachricht eine Anforderung zum Auslösen der Vorrichtung und das Ticket umfasst;
eine Authentisierungseinrichtung (507b) zum Authentisieren der Auslösequelle; und
einen Auslösesender (508b) zum Senden einer Auslösenachricht an die Vorrichtung, wenn das empfangene Ticket die authentisierte Auslösequelle und die Vorrichtung korrekt assoziiert.

12. Auslöseserver nach Anspruch 11, wobei die Ticket-Verhandlungseinrichtung (505b) so konfiguriert ist, dass sie das Ticket in Reaktion auf den Empfang der Initiierungsnachricht erzeugt und das Ticket an die Auslöseinstanzen-Autorisierungseinrichtung sendet.

13. Auslöseserver nach Anspruch 11 oder 12, wobei der Initiierungsnachrichtenempfänger so konfiguriert ist, dass er eine Angabe eines Mechanismus zum Authentisieren der Auslösequelle empfängt und die Auslösequelle unter Verwendung des angegebenen Mechanismus authentisiert.

14. Verfahren zum Betreiben einer Auslöseinstanzen-Autorisierungseinrichtung (204) zum Autorisieren einer Auslösequelle (202) zum Ausgeben einer Auslöseanforderung an eine Vorrichtung (201) in einem Netzwerk (200), wobei das Verfahren umfasst:
Senden eine Initiierungsnachricht (701) über eine sichere Verbindung an einen Auslöseserver (203), wobei die Initiierungsnachricht eine Angabe der Identität der Auslösequelle und der Identität der Vorrichtung umfasst;
Senden an den oder Empfangen von dem Auslöseserver (704) eines Tickets, das die Auslösequelle und die Vorrichtung assoziiert; und
Senden des Tickets (705) an die Auslösequelle.

15. Verfahren zum Betreiben einer Auslösequelle (202) zum Ausgeben einer Auslöseanforderung an eine Vorrichtung (201) in einem Netzwerk (200), wobei das Verfahren umfasst:
Empfangen eines Tickets (706) von einer Auslöseinstanzen-Autorisierungseinrichtung (204), wobei das Ticket von einem Auslöseserver (203) als eine eindeutige Assoziierung der Auslösequelle und der Vorrichtung verwendet werden kann;
Senden der Auslöseanforderung (707) zusammen mit dem Ticket an den Auslöseserver; und
Authentisieren (210) der Auslösequelle für den Auslöseserver.

16. Verfahren zum Betreiben eines Auslöseservers (203) zum Senden einer Auslösenachricht an eine Vorrichtung (201) in einem Netzwerk (200), wobei das Verfahren umfasst:
Empfangen einer Initiierungsnachricht (702) von einer Auslöseinstanzen-Autorisierungseinrichtung (204) über eine sichere Verbindung, wobei die Initiierungsnachricht eine Angabe der Identität der Vorrichtung und der Identität einer Auslösequelle (202) umfasst, die zum Ausgeben einer Auslöseanforderung an die Vorrichtung autorisiert werden soll;
Vereinbaren (703) eines Tickets mit der Auslöseinstanzen-Autorisierungseinrichtung, das vom Auslöseserver als eine eindeutige Assoziierung der Auslösequelle und der Vorrichtung verwendet werden kann, und Speichern des Tickets;
Empfangen einer Auslöseanforderungsnachricht (708) von der Auslösequelle, wobei die Auslöseanforderungsnachricht eine Anforderung zum Auslösen der Vorrichtung und das Ticket umfasst;
Authentisieren der Auslösequelle (709); und
Senden einer Auslösenachricht (712) an die Vorrichtung, wenn das empfangene Ticket die authentisierte Auslösequelle und die Vorrichtung (711) korrekt assoziiert.

17. Computerprogramm, umfassend computerlesbaren Code, der bei Ausführung durch eine Auslöseinstanzen-Autorisierungseinrichtung die Auslöseinstanzen-Autorisierungseinrichtung veranlasst, wie eine Auslöseinstanzen-Autorisierungseinrichtung nach einem der Ansprüche 2 bis 5 zu funktionieren.

18. Computerprogramm, umfassend computerlesbaren Code, der bei Ausführung durch eine Auslösequelle die Auslösequelle veranlasst, wie eine Auslösequelle nach einem der Ansprüche 7 bis 10 zu funktionieren.

19. Computerprogramm, umfassend computerlesbaren Code, der bei Ausführung durch einen Auslöseserver den Auslöseserver veranlasst, wie ein Auslöseserver nach einem der Ansprüche 11 bis 13 zu funktionieren.

20. Computerprogramm, umfassend computerlesbaren Code, der bei Ausführung auf einer Vorrichtung die Vorrichtung zum Ausführen des Verfahrens nach einem der Ansprüche 14 bis 16 veranlasst.

21. Speicher, umfassend ein computerlesbares Mittel, auf dem das Computerprogramm nach Anspruch 19 oder 20 gespeichert ist.

## Revendications

1. Système pour autoriser une source de déclenchement (202) à émettre une demande de déclenchement à un dispositif (201) dans un réseau (200), le dispositif étant associé à un autorisateur d'entité de déclenchement (204) et configuré pour recevoir des messages de déclenchement uniquement par l'intermédiaire d'un serveur de déclenchement (203), le système comprenant :
l'autorisateur d'entité de déclenchement étant configuré pour envoyer un message d'initiation (1) au serveur de déclenchement par l'intermédiaire d'une connexion sécurisée, le message d'initiation incluant une indication de l'identité de la source de déclenchement et de l'identité du dispositif ;
l'autorisateur d'entité de déclenchement et le serveur de déclenchement étant configurés pour convenir d'un ticket utilisable par le serveur de déclenchement en tant qu'une association unique de la source de déclenchement et du dispositif ;
l'autorisateur d'entité de déclenchement étant configuré pour envoyer le ticket (3) à la source de déclenchement ;
la source de déclenchement étant configurée pour envoyer un message de demande de déclenchement (4) au serveur de déclenchement, le message de demande de déclenchement incluant le ticket et une demande de déclenchement du dispositif ; et
le serveur de déclenchement étant configuré pour recevoir le ticket en provenance de la source de déclenchement et authentifier la source de déclenchement (5) et, si le ticket reçu associe correctement la source de déclenchement authentifiée et le dispositif, envoyer un message de déclenchement (6) au dispositif.

2. Autorisateur d'entité de déclenchement (204) pour autoriser une source de déclenchement (202) à émettre une demande de déclenchement à un dispositif (201) dans un réseau (200), comprenant :
un initiateur de message (304b) pour envoyer un message d'initiation à un serveur de déclenchement (203) par l'intermédiaire d'une connexion sécurisée, le message d'initiation incluant une indication de l'identité de la source de déclenchement et de l'identité du dispositif ;
un négociateur de ticket (305b) pour envoyer, à destination du serveur de déclenchement, ou recevoir, en provenance du serveur de déclenchement, un ticket associant la source de déclenchement et le dispositif (305b) ; et
un expéditeur de ticket pour envoyer le ticket (306b) à la source de déclenchement.

3. Autorisateur d'entité de déclenchement selon la revendication 2, dans lequel l'initiateur de message (304b) est configuré pour inclure, dans le message d'initiation, une indication d'un mécanisme par lequel la source de déclenchement doit être authentifiée par le serveur de déclenchement, et l'expéditeur de ticket (306b) est configuré pour envoyer l'indication du mécanisme à la source de déclenchement.

4. Autorisateur d'entité de déclenchement selon la revendication 2 ou 3, dans lequel l'expéditeur de ticket est configuré pour envoyer une adresse du serveur de déclenchement à la source de déclenchement.

5. Autorisateur d'entité de déclenchement selon l'une quelconque des revendications 2 à 4, dans lequel le négociateur de ticket est configuré pour envoyer, à destination du serveur de déclenchement, ou recevoir, en provenance du serveur de déclenchement, des identifiants de serveur de déclenchement pour la source de déclenchement pour permettre au serveur de déclenchement d'authentifier la source de déclenchement, et pour envoyer les identifiants à la source de déclenchement sur une connexion sécurisée.

6. Dispositif M2M comprenant l'autorisateur d'entité de déclenchement selon l'une quelconque des revendications 2 à 5.

7. Source de déclenchement (202) pour émettre une demande de déclenchement à un dispositif (201) dans un réseau (200), comprenant :
un récepteur de ticket (404b) pour recevoir un ticket en provenance d'un autorisateur d'entité de déclenchement (204), le ticket étant utilisable par un serveur de déclenchement (203) en tant qu'une association unique de la source de déclenchement et du dispositif ;
un expéditeur de demande de déclenchement (405b) pour envoyer une demande de déclenchement au serveur de déclenchement, accompagnée du ticket ; et
un authentificateur (406b) pour authentifier la source de déclenchement au serveur de déclenchement.

8. Source de déclenchement selon la revendication 7, dans laquelle le récepteur de ticket (404b) est configuré pour recevoir, en provenance de l'authentificateur d'entité de déclenchement, une indication d'un mécanisme d'authentification, et l'authentificateur (406b) est configuré pour authentifier la source de déclenchement au serveur de déclenchement en utilisant le mécanisme d'authentification indiqué.

9. Source de déclenchement selon la revendication 8, dans laquelle le mécanisme d'authentification inclut l'utilisation d'un authentificateur externe délégué (205).

10. Source de déclenchement selon l'une quelconque des revendications 7 et 8, dans laquelle le récepteur de ticket (404b) est configuré pour recevoir, en provenance de l'autorisateur d'entité de déclenchement, des identifiants pour authentifier la source de déclenchement au serveur de déclenchement et pour utiliser les identifiants dans l'authentification.

11. Serveur de déclenchement (203) pour envoyer un message de déclenchement à un dispositif (201) dans un réseau, comprenant :
un récepteur de message d'initiation (504b) pour recevoir un message d'initiation en provenance d'un autorisateur d'entité de déclenchement (204) par l'intermédiaire d'une connexion sécurisée, le message d'initiation incluant une indication de l'identité du dispositif et de l'identité d'une source de déclenchement (202) à autoriser à émettre une demande de déclenchement au dispositif ;
un négociateur de ticket (505b) pour convenir, avec l'autorisateur d'entité de déclenchement, d'un ticket utilisable par le serveur de déclenchement en tant qu'une association unique de la source de déclenchement et du dispositif, et pour mémoriser le ticket ;
un récepteur de demande de déclenchement (506b) pour recevoir un message de demande de déclenchement en provenance de la source de déclenchement, le message de demande de déclenchement incluant une demande de déclenchement du dispositif et le ticket ;
un authentificateur (507b) pour authentifier la source de déclenchement ; et
un expéditeur de déclenchement (508b) pour envoyer un message de déclenchement au dispositif si le ticket reçu associe correctement la source de déclenchement authentifiée et le dispositif.

12. Serveur de déclenchement selon la revendication 11, dans lequel le négociateur de ticket (505b) est configuré pour générer le ticket en réponse à la réception du message d'initiation, et pour envoyer le ticket à l'autorisateur d'entité de déclenchement.

13. Serveur de déclenchement selon la revendication 11 ou 12, dans lequel le récepteur de message d'initiation est configuré pour recevoir une indication d'un mécanisme d'authentification de la source de déclenchement, et pour authentifier la source de déclenchement en utilisant le mécanisme indiqué.

14. Procédé de fonctionnement d'un autorisateur d'entité de déclenchement (204) pour autoriser une source de déclenchement (202) à émettre une demande de déclenchement à un dispositif (201) dans un réseau (200), le procédé comprenant :
l'envoi d'un message d'initiation (701) à un serveur de déclenchement (203) par l'intermédiaire d'une connexion sécurisée, le message d'initiation incluant une indication de l'identité de la source de déclenchement et de l'identité du dispositif ;
l'envoi, à destination du serveur de déclenchement (704), ou la réception, en provenance du serveur de déclenchement, d'un ticket associant la source de déclenchement et le dispositif ; et
l'envoi du ticket (705) à la source de déclenchement.

15. Procédé de fonctionnement d'une source de déclenchement (202) pour émettre une demande de déclenchement à un dispositif (201) dans un réseau (200), le procédé comprenant :
la réception d'un ticket (706) en provenance d'un autorisateur d'entité de déclenchement (204), le ticket étant utilisable par un serveur de déclenchement (203) en tant qu'une association unique de la source de déclenchement et du dispositif ;
l'envoi de la demande de déclenchement (707) au serveur de déclenchement, accompagnée du ticket ; et
l'authentification (210) de la source de déclenchement au serveur de déclenchement.

16. Procédé de fonctionnement d'un serveur de déclenchement (203) pour envoyer un message de déclenchement à un dispositif (201) dans un réseau (200), le procédé comprenant :
la réception d'un message d'initiation (702) en provenance d'un autorisateur d'entité de déclenchement (204) par l'intermédiaire d'une connexion sécurisée, le message d'initiation incluant une indication de l'identité du dispositif et de l'identité d'une source de déclenchement (202) à autoriser à émettre une demande de déclenchement au dispositif ;
la convention (703), avec l'autorisateur d'entité de déclenchement, d'un ticket utilisable par le serveur de déclenchement en tant qu'une association unique de la source de déclenchement et du dispositif, et la mémorisation du ticket ;
la réception d'un message de demande de déclenchement (708) en provenance de la source de déclenchement, le message de demande de déclenchement incluant une demande de déclenchement du dispositif et le ticket ;
l'authentification de la source de déclenchement (709) ; et
si le ticket reçu associe correctement la source de déclenchement authentifiée et le dispositif (711), l'envoi d'un message de déclenchement (712) au dispositif.

17. Programme informatique, comprenant un code lisible par ordinateur qui, lorsqu'il est exécuté par un autorisateur d'entité de déclenchement, amène l'autorisateur d'entité de déclenchement à fonctionner en tant qu'un autorisateur d'entité de déclenchement selon l'une quelconque des revendications 2 à 5.

18. Programme informatique, comprenant un code lisible par ordinateur qui, lorsqu'il est exécuté par une source de déclenchement, amène la source de déclenchement à fonctionner en tant qu'une source de déclenchement selon l'une quelconque des revendications 7 à 10.

19. Programme informatique, comprenant un code lisible par ordinateur qui, lorsqu'il est exécuté par un serveur de déclenchement, amène le serveur de déclenchement à fonctionner en tant qu'un serveur de déclenchement selon l'une quelconque des revendications 11 à 13.

20. Programme informatique, comprenant un code lisible par ordinateur qui, lorsqu'il est exécuté sur un dispositif, amène le dispositif à exécuter le procédé selon l'une quelconque des revendications 14 à 16.

21. Mémoire comprenant un moyen lisible par ordinateur sur lequel un programme informatique selon la revendication 19 ou 20 est mémorisé.
